# EUROPEAN PATENT APPLICATION

(11) **EP 4 714 882 A1**
(43) Date of publication of application: **25.03.2026**
(21) Application number: 24852444.9
(22) Date of filing: 06.08.2024
(51) Int. Cl.: B65H 43/04, B65H 23/18, H01M 4/04, H01M 10/04

(54) **REWINDING STAGE AND SECONDARY BATTERY MANUFACTURING SYSTEM INCLUDING SAME**

(30) Priority: 07.08.2023 KR 20230102905; 05.08.2024 KR 20240103566
(71) Applicant: LG Energy Solution, Ltd., Seoul 07335 (KR)
(72) Inventor: PARK, Jae Ki, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/095988
(87) International publication number: WO 2025/034091

(57) **Abstract**

Example embodiments provide a rewinding equipment. The rewinding equipment includes: an unwinder configured to unwind an electrode sheet from a first electrode roll; a scrap port configured to scrap a defective part of the electrode sheet; a rewinder configured to wind the electrode sheet into a second electrode roll; a first rotary encoder configured to sense a length of the electrode sheet unwound by the unwinder to generate an input amount signal; a second rotary encoder configured to sense a length of the electrode sheet wound by the rewinder to generate an exhaustion amount signal; and a first controller configured to collect coordinate data indicating a position on the electrode sheet based on the exhaustion amount signal.

## Description

### [Technical Field]

The present invention relates to a rewinding stage and a secondary battery manufacturing system including the same. The present application claims the benefit of priority based on Korean Patent Application No. 10-2023-0102905, filed on August 7, 2023 and Korean Patent Application No. 110-2024-0103566, filed on August 5, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulation material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a rewinding stage with improved reliability and traceability, and a secondary battery manufacturing system including the same.

### [Technical Solution]

Example embodiments of the present invention provide a rewinding stage. The rewinding stage includes: an unwinder configured to unwind an electrode sheet from a first electrode roll; a scrap port configured to scrap a defective part of the electrode sheet; a rewinder configured to wind the electrode sheet into a second electrode roll; a first rotary encoder configured to sense a length of the electrode sheet unwound by the unwinder to generate an input amount signal; a second rotary encoder configured to sense a length of the electrode sheet wound by the rewinder to generate an exhaustion amount signal; and a first controller configured to collect coordinate data indicating a position on the electrode sheet based on the exhaustion amount signal.

The first controller may be configured to collect scrap data indicating a length of the scrapped part of the electrode sheet based on the input amount signal.

The rewinding equipment may further include an NG sensor configured to sense an NG mark and an NG tag on the electrode roll to generate an NG sensing signal.

The first controller may be configured to collect NG sensing data by relating the NG sensing signal with the coordinate data.

The first controller may be configured to control the unwinder and the rewinder based on the NG sensing data.

The rewinding equipment may further include a process first controller configured to control the unwinder and the rewinder based on the NG sensing data.

The rewinding equipment may further include a joint sensor configured to sense a joint of the electrode roll to generate a joint sensing signal.

The first controller may be configured to collect joint sensing data by relating the joint sensing signal with the coordinate data.

The rewinding equipment may further include a datum point sensor configured to sense a datum point on the electrode roll to generate a datum point sensing signal.

The first controller may be configured to collect datum point sensing data by relating the datum point sensing signal with the coordinate data.

The first controller maybe configured to transmit the datum point sensing data to a server, and the server may be configured to generate a roll map indicating the electrode sheet based on the datum point sensing data.

The first controller may be configured to transmit the datum point sensing data to a second controller, and the second controller may be configured to control the unwinder and the rewinder.

The second controller may be configured to transmit the datum point sensing data to a server, and the server may be configured to generate a roll map indicating the electrode sheet based on the datum point sensing data.

Example embodiments provide a secondary battery manufacturing system. The secondary battery manufacturing system may include a roll pressing equipment configured to perform a rolling process, and a rewinding equipment configured to process a first electrode roll processed by the roll pressing equipment, in which the rewinding equipment includes an unwinder configured to unwind an electrode sheet from the first electrode roll, a scrap port configured to scrap a defective part of the electrode sheet, a rewinder configured to wind the electrode sheet into a second electrode roll, a first rotary encoder configured to sense a length of the electrode sheet unwound by the unwinder to generate an input amount signal, a second rotary encoder configured to sense a length of the electrode sheet wound by the rewinder to generate an exhaustion amount signal, and a first controller configured to collect coordinate data indicating a position on the electrode sheet based on the exhaustion amount signal.

The first controller may be configured to collect scrap data indicating a length of the scrapped part of the electrode sheet based on the input amount signal.

The secondary battery manufacturing system may further include an NG sensor configured to sense an NG mark and an NG tag on the electrode roll to generate an NG sensing signal.

The first controller may be configured to collect NG sensing data by relating the NG sensing signal with the coordinate data.

The first controller may be configured to control the unwinder and the rewinder based on the NG sensing data.

The secondary battery manufacturing system may further include a second controller configured to control the unwinder and the rewinder based on the NG sensing data.

### [Advantageous Effects]

Example embodiments of the present invention provide a rewinding stage enabling feedback, feedforward, and tracking of an electrode process, and a secondary battery manufacturing system including the same.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 illustrates a secondary battery manufacturing system according to example embodiments.
FIG. 3 illustrates a secondary battery manufacturing system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

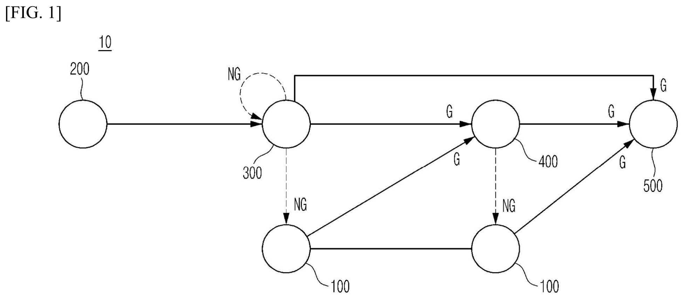

FIG. 1 illustrates a secondary battery manufacturing system 10 according to example embodiments.

Referring to FIG. 1, the secondary battery manufacturing system 10 may include rewinding equipments 100, a coating equipment 200, a roll pressing equipment 300, a slitting equipment 400, and a notching equipment 500.

An electrode sheet unwound from an input electrode roll may be processed by a die coater of the coating equipment 200, pressing rolls of the roll pressing equipment 300, or a slitting knife of the slitting equipment 400, and the processed electrode sheet may be wound into an electrode roll. Accordingly, each of operations performed by the coating equipment 200, the roll pressing equipment 300, and the slitting equipment 400 to produce electrodes of a secondary battery may be referred to as a roll-to-roll process.

The coating equipment 200 may perform the coating process on the electrode sheet. The coating process is a process of applying a coating material such as the electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing equipment 300 may perform the roll pressing process on the electrode sheet. The roll pressing process is a process of passing an electrode sheet ES coated with the electrode slurry between pressing rolls facing each other. By using the pressing rolls, a surface of an electrode may be planarized and a bonding force between the active material and a current collector may be increased.

The slitting equipment 400 may perform the slitting process on the electrode sheet. The electrode sheet may be divided into a plurality of electrode sheets by the slitting process.

A roll-to-roll process is performed on the electrode sheet ES unwound from a first electrode roll ER1 and wound into a second electrode roll ER2 and thus the electrode process may be referred to as a roll-to-roll process.

The notching equipment 500 may cut the electrode sheet unwound from the electrode roll into a shape of an electrode of a battery cell. Accordingly, unit electrodes may be formed by the notching equipment 500. The notching equipment 500 may further perform a drying process on one of the electrode sheet and the unit electrodes.

When the electrode sheet includes a defect, the defect of the electrode sheet may be removed. The defect of the electrode sheet may be removed by one of the roll pressing equipment 200 and the rewinding equipments 100.

A substantial process may not be performed on the electrode sheet by each of the rewinding equipments 100. Each of the rewinding equipments 100 may change a winding direction of the electrode sheet. Each of the rewinding equipments 100 may unwind an electrode sheet from an electrode roll, remove a defect of the electrode sheet unwound from the electrode roll, and rewind the electrode sheet from which the defect is removed. Accordingly, in addition to the removal of the defect of the electrode roll, an outer part of the input electrode roll may be wound to be an inner part of an electrode roll to be output. Similarly, an inner part of the input electrode roll may be wound to be an outer part of the electrode roll to be output.

The roll pressing equipment 300 may remove the defect of the electrode sheet while performing the roll pressing process or remove only the defect of the electrode sheet without performing the roll pressing process. An operation of the roll pressing equipment 300 that removes only a defect of an electrode sheet without performing the roll pressing process is referred to as a rewinding mode. In the rewinding mode, each of the pressing rolls may be moved to a position spaced apart from an electrode.

Unit electrodes may be provided as an electrode roll is sequentially processed by the coating equipment 200, the roll pressing equipment 300, the slitting equipment 400, and the notching equipment 500. Wide unit electrodes may be directly transferred to the notching equipment 500 without being slit by the slitting equipment 400 after the roll pressing process is performed by the roll pressing equipment 300.

When defect of the electrode roll that is processed by the coating equipment 200 and put into the roll pressing equipment 300 is excessive, the defects of the electrode roll may be removed by the roll pressing equipment 300. The excessive defect of the electrode roll processed by the coating equipment 200 may include a large amount of folded taps and a ring defect.

When the defect of the electrode roll processed by the roll pressing equipment 300 is excessive, the defect of the electrode roll may be removed by one of the roll pressing equipment 300 and the rewinding equipment 100 that operate in the rewinding mode. Next, an electrode roll with a reduced defect (or no defect) may be input to the slitting equipment 400. The excessive defect of the electrode roll processed by the roll pressing equipment 300 may include winding deviation and the number of defective tags that exceeds an upper limit.

When a defect of the electrode roll processed by the slitting equipment 400 is excessive, the defect of the electrode roll may be removed by the rewinding equipment 100. Next, an electrode roll with a reduced defect (or no defect) may be input to the notching equipment 500. The excessive defect of the electrode roll processed by the slitting equipment 400 may include the number of defective tags that exceeds the upper limit.

Here, each of the rewinding equipments 100 may be enabled for online functionality. Each of the rewinding equipments 100 may be configured to scrap a defect of the electrode roll and collect scrap data indicating a length of a scrapped part of the electrode roll. Accordingly, a length of a part of an electrode scrapped by the rewinding equipments 100 may be updated, and the traceability of a secondary battery manufacturing process may be improved.

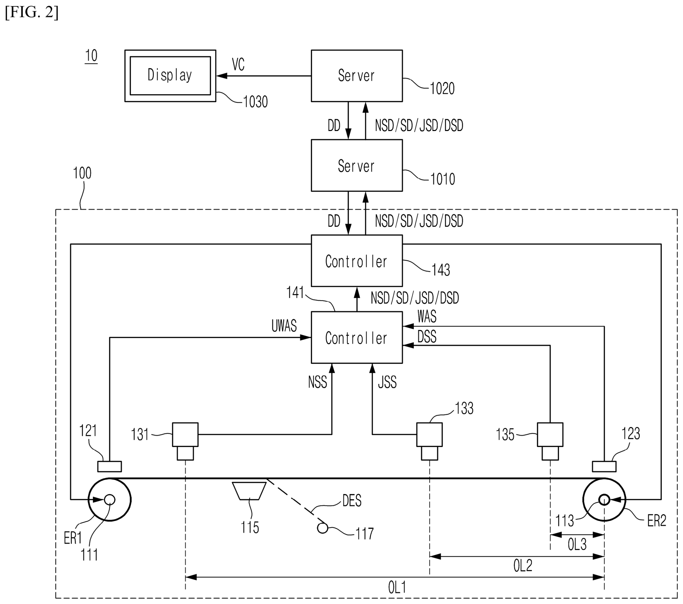

FIG. 2 illustrates a secondary battery manufacturing system 10 according to example embodiments.

Referring to FIG. 2, the secondary battery manufacturing system 10 may include a rewinding equipment 100, a server 1010, a server 1020, and a display device 1030.

The rewinding equipment 100 may include an unwinder 111, a rewinder 113, a splicing table 115, a scrap port 117, a first rotary encoder 121, a second rotary encoder 123, a datum point sensor 135, a first controller 141, and a second controller 143.

The secondary battery manufacturing system 10 may be configured to generate a roll map including data about an electrode sheet ES. The roll map may represent the electrode sheet ES based on coordinates indicating a position on the electrode sheet ES. A secondary battery manufacturing process may be performed on the electrode sheet ES as described below. The roll map may include data that represents a history of processes performed on the electrode sheet ES and relates to coordinates. Accordingly, the roll map enables feedback, feedforwarding, and tracking of the secondary battery manufacturing process as described below.

A first electrode roll ER1 on which a previous process is performed may be loaded on the unwinder 111. The unwinder 111 may be configured to unwind the electrode sheet ES from the first electrode roll ER1. The rewinder 113 may be configured to wind the electrode sheet ES to form a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113.

Roll maps may be generated in units of lots. A lot is a production unit of the roll-to-roll process, and the separated second electrode roll ER2 is an example of lot. The first electrode roll ER1 newly loaded on the unwinder 111 is also an example of a lot. Accordingly, the server 1020 may store a first roll map of a previous process (e.g., the coating process, the roll pressing process, or the slitting process). The first roll map may correspond to the first electrode roll ER1. In addition, the server 1020 may be configured to generate a second roll map of the second electrode roll ER2 based on the processing of the rewinding equipment 100. The second roll map may correspond to the second electrode roll ER2.

As a non-limiting example, the second roll map may be generated by loading and updating the first roll map. Alternatively, the second roll map may be generated based on data generated by the rewinding equipment 100 without loading the first roll map.

In a roll map, time series data constructed over time (i.e., according to the progress of a process) may be related to coordinate data based on the amount of movement of the electrode sheet ES (i.e., the amount of exhaustion or the amount of input).

The manufacture of a secondary battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

An electrode process of a secondary battery includes a series of roll-to-roll processes. For feed forwarding, time series data should be related to positions on workpieces, components, intermediate products, and products of the real world. Here, the feed forwarding may include controlling a process for the electrode sheet ES based on the roll map of the first electrode roll ER1 generated in the previous process. The roll map may allow time series data to be related to coordinate data including coordinates of the positions on the real-world workpieces, the components, the intermediate products, and the products. The roll map may provide matching between the time series data and the workpieces, the components, the intermediate products, and the products of the real world, based on the coordinate data. Accordingly, the generation of the roll map and feed forwarding based on the roll map may improve the efficiency of production and quality by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map. For example, the roll map of the first electrode roll ER1 processed in a current process may include defect data DD, and the electrode sheet ES unwound from the first electrode roll ER1 may be scrapped by the rewinding equipment 100, based on the defect data DD.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

The first rotary encoder 121 may be configured to sense the amount of a part of the electrode sheet ES unwound from the first electrode roll ER1 by the unwinder 111. Accordingly, the first rotary encoder 121 may be configured to generate an input amount signal UWAS indicating a length of the part of the electrode sheet ES unwound by the unwinder 111. The first rotary encoder 121 may be configured to transmit the input amount signal UWAS to the first controller 141.

The second rotary encoder 123 may be configured to sense the amount of a part of the electrode sheet ES wound into the second electrode roll ER2 by the rewinder 113. Accordingly, the second rotary encoder 123 may be configured to generate an exhaustion amount signal WAS indicating a length of the part of the electrode sheet ES wound by the rewinder 113. The second rotary encoder 123 may be configured to transmit the exhaustion amount signal WAS to the first controller 141.

A part of the electrode sheet ES may be scrapped as described below. Accordingly, the length of the part of the electrode sheet ES unwound by the unwinder 111 may be different from the amount of the part of the electrode sheet ES wound by the rewinder 113.

The first controller 141 may be configured to collect coordinate data of the electrode sheet ES based on the exhaustion amount signal WAS and/or the input amount signal UWAS of the electrode sheet ES. For example, the first controller 141 may determine a moving distance of the electrode sheet ES based on the input amount signal UWAS of the electrode sheet ES and thus may be configured to determine a position of a part of the electrode sheet ES to be unwound by the unwinder 111 on the electrode sheet ES at each point in time when an event occurs in the electrode sheet ES. As another example, the first controller 141 may determine a moving distance of the electrode sheet ES based on the exhaustion amount signal WAS of the electrode sheet ES and thus may be configured to determine a position of a part of the electrode sheet ES to be wound by the rewinder 113 on the electrode sheet ES at each point in time when an event occurs in the electrode sheet ES. As another example, the first controller 141 may determine a moving distance of the first electrode sheet ES1 based on each of the exhaustion amount signal WAS and the input amount signal UWAS.

Here, the event may include all processing, inspection, and measurement performed on the electrode sheet ES by the rewinding equipment 100, such as cutting the electrode sheet ES, joining parts of the electrode sheet ES, sensing a datum point on the electrode sheet ES, and sensing a defective tag on the electrode sheet ES. Hereinafter, as a non-limiting example, the technical idea of the present invention will be described with respect to an embodiment in which the first controller 141 collects coordinate data based on the exhaustion amount signal WAS of the electrode sheet ES.

The coordinate data may include a coordinate matching each part of the electrode sheet ES. That is, each of arbitrary points on the electrode sheet ES may match a coordinate. The coordinate may be one-dimensional (1D) quantity in a longitudinal direction of the electrode sheet ES but is not limited thereto. The coordinate may be two-dimensional (2D) quantity in the longitudinal direction and an Y-axis direction in a width direction of the electrode sheet ES.

An NG sensor 131 may be configured to sense one of an NG mark and an NG tag on the electrode sheet ES. The NG mark may be formed by, for example, an inkjet printer or the like and may include information about the position and type of a defect. The NG tag may be attached to the electrode sheet ES by an operator or an NG tag attacher. The NG tag may indicate a position of a defect of the electrode sheet ES. As a non-limiting example, the NG sensor 131 may be a color sensor or a vision machine. The NG sensor 131 may be configured to generate an NG sensing signal NSS. The NG sensor 131 may be configured to transmit the NG sensing signal NSS to the first controller 141.

The first controller 141 may be configured to collect NG sensing data NSD based on the NG sensing signal NSS. The first controller 141 may be configured to relate the NG sensing signal NSS with the coordinate data to collect the NG sensing data NSD. The NG sensing data NSD may include, for example, a defect value indicating whether there is a defect and an aspect of the defect, and a coordinate matching the defect value.

To collect the NG sensing data NSD, the coordinate data may be calibrated based on an offset length OL1. The calibrating of the coordinate data includes compensating for the difference between a part of the electrode sheet ES sensed by the first rotary encoder 121, i.e., a part of the electrode sheet ES wound by the rewinder 113, and a part of the electrode sheet ES sensed by the NG sensor 131.

According to example embodiments, the first controller 141 may calibrate coordinate data collected at the same time as the NG sensing signal NSS based on the offset length OL1 and relate the calibrated coordinate data with the NG sensing signal NSS to collect the NG sensing data NSD. A processor 131P may be configured to transmit the NG sensing data NSD to the first controller 151.

The offset length OL1 is a length of the electrode sheet ES between the NG sensor 131 and the rewinder 113 according to a moving path of the electrode sheet ES. The offset length OL1 may be equal to or greater than a straight line distance between the NG sensor 131 and the rewinder 113.

The second controller 143 may be configured to control operations of the unwinder 111, the rewinder 113, the scrap port 117, and a processing apparatus 119. The second controller 143 may be configured to generate a signal for operating or stopping the unwinder 111, the rewinder 113, the scrap port 117 and the processing apparatus 119. The signal for operating or stopping the unwinder 111, the rewinder 113, the scrap port 117, and the processing apparatus 119 may be generated based on a body including a product ID and details of a manufacturing recipe.

The second controller 143 may receive the NG sensing data NSD from the first controller 141. The second controller 143 may be configured to receive the defect data DD from the server 1020. The defect data DD may be loaded to the second controller 143 via the server 1010. Here, the defect data DD may indicate a position of a defect on the first electrode roll ER1. The defect data DD may be included in the first roll map of the first electrode roll ER1.

The second controller 143 may be configured to generate the signal for operating or stopping the unwinder 111, the rewinder 113, the scrap port 117, and the processing apparatus 119 based on the NG sensing data NSD and the defect data DD. When a defect of the electrode sheet ES2 identified using the defect data DD and the NG sensing data NSD approaches the splicing table 115, the second controller 143 may be configured to reduce a movement speed of the electrode sheet ES or to generate a signal for stopping unwinding performed by the unwinder 111 and winding performed by the rewinder 113.

After a start point of the defect (or a point adjacent to the start point of the defect in consideration of a process margin) is cut on the splicing table 215, the scrap port 217 may be configured to wind a defective part DES of the electrode sheet ES as indicated by a thick dashed line. After the defective part DES of the electrode sheet ES is sufficiently wound by the scrap port 117, a part of the electrode sheet ES connected to the scrap port 117 and a part of the electrode sheet ES connected to the unwinder 111 may be separated from each other. Next, a current process may be continued by connecting the part of the electrode sheet ES connected to the unwinder 111 and a part of the electrode sheet ES connected to the rewinder 113. The part of the electrode sheet ES connected to the unwinder 111 and the part of the electrode sheet ES connected to the rewinder 113 may be connected on the splicing table 115.

Conventionally, an electrode sheet is wound without scrapping a defect or a defective part remains in the electrode sheet although the defect is scrapped. According to example embodiments, the defective part DES of the electrode sheet ES is scrapped based on the NG sensing data NSD and the defect data DD and thus the reliability and traceability of scrapping the electrode sheet ES may be improved.

To scrap the defective part DES of the electrode sheet ES, the unwinder 111 and the rewinder 113 may be stopped, and the defective part DES of the electrode sheet ES may be moved to the scrap port 117 through driving of the unwinder 111 without driving the rewinder 113. The first controller 141 may be configured to collect scrap data SD based on an unwinding amount signal UWAS after the scrapping of the defective part DES of the electrode sheet ES starts. For collection of the scrap data SD, the first controller 141 may receive a signal for controlling the operations of the unwinder 111 and the rewinder 113 from the second controller 143. As another example, the first controller 141 may be configured to collect the scrap data SD based on the amount of rotation of a driving roll of the scrap port 117. As another example, the first controller 141 may be configured to collect the scrap data SD based on a change in a distance between datum points on the electrode sheet ES and a distance between a joint of and a datum point on the electrode sheet ES.

Conventionally, the amount of a part of an electrode sheet to be scrapped is subjectively determined by an operator or is determined based on the weight of a scrapped part of the electrode sheet, and thus, the accuracy of the amount of the part of the electrode sheet to be scrapped is low and the traceability of a process decreases. According to example embodiments, a disposal process that depends on the subjectivity of an operator may be objectified by collecting the scrap data SD indicating the position and amount of the scrapped defective part DE of the electrode sheet ES based on the input amount signal UWAS. Accordingly, the reliability and reliability of the manufacture of a secondary battery may be improved.

A joint sensor 133 may be configured to sense joints of the electrode sheet ES to generate a joint sensing signal JSS. The joints of the electrode sheet ES may be joined together after the defective part DES of the electrode sheet ES is scrapped. As a non-limiting example, the joint sensor 131 may be a color sensor or a vision machine. The joint sensor 133 may be configured to transmit the joint sensing signal JSS to the first controller 141.

The first controller 141 may be configured to collect joint sensing data JSD based on the joint sensing signal JSS. The first controller 141 may be configured to collect the joint sensing data JSD by relating the joint sensing signal JSS with coordinate data.

According to example embodiments, the first controller 141 may calibrate coordinate data collected at the same time as the joint sensing signal JSS based on an offset length OL2 and relate the calibrated coordinate data with the joint sensing signal JSS to collect the joint sensing data JSD.

The offset length OL2 is a length of the electrode sheet ES between the joint sensor 133 and the rewinder 113 according to a moving path of the electrode sheet ES. The offset length OL2 may be equal to or greater than a straight line distance between the joint sensor 133 and the rewinder 113.

The datum point sensor 135 may be configured to sense datum points on the electrode sheet ES to generate a datum point sensing signal DSS. Datum points may be formed at set intervals on the electrode sheet ES to indicate a position on the electrode sheet ES. Each of the datum points may be, for example, 2D barcode including information about a formed sequence. Accordingly, the datum point sensing signal DSS may include a time value corresponding to sensing of a datum point and a sequence value of the datum point. The datum point sensor 135 may be configured to transmit the datum point sensing signal DSS to the first controller 141.

The first controller 141 may be configured to collect datum point sensing data DSD based on the datum point sensing signal DSS. The first controller 141 may be configured to collect the datum point sensing data DSD by relating the datum point sensing signal DSS with coordinate data.

According to example embodiments, the first controller 141 may be configured to calibrate coordinate data collected at the same time as the datum point sensing signal DSS based on an offset length OL3 and relate the calibrated coordinate data with the datum point sensing signal DSS to collect the datum point sensing data DSD.

The offset length OL3 is a length of the electrode sheet ES between the datum point sensor 135 and the rewinder 113 according to a moving path of the electrode sheet ES. The offset length OL3 may be equal to or greater than a straight line distance between the datum point sensor 135 and the rewinder 113.

According to example embodiments, data generated based on the scrap data SD, the NG sensing data NSD, and an event of the electrode sheet ES may be calibrated based on the datum point sensing data DSD.

The rewinding equipment 100 may further include a measuring device and an inspector. Each of the measuring device and the inspector may include a sensing part and a processor. The measuring device may be configured to generate measurement data, and the inspector may be configured to generate inspection data. The processor of the inspector and the processor of the measuring device may be respectively connected to the inspector of the inspector and the sensing part of the measuring device by wire or wirelessly.

The measurement data may include a plurality of measured values expressed numerically. For example, the measurement data may include dimension data, e.g., a thickness and a width, of the electrode sheet ES, data of a loading amount of a coating material on the electrode sheet ES, dimension data, e.g., a width of an insulating material on the coating material and an overlapping width between the coating material and the insulating material, mismatch data between coated lanes on a top surface of the electrode sheet ES and coated lanes on a bottom surface of the electrode sheet ES, and the like. Here, the loading amount is the amount of the coating material loaded per unit area of the electrode sheet ES, and may be an area density of the coating material.

The inspection data collected by the inspector may include a result of judging the quality of a part of the electrode sheet ES and a process event. For example, the inspection data may include data about the appearance of the electrode sheet ES collected by an imagebased inspection device such as a vision machine, data about disconnections and joints of the electrode sheet ES, data about a part of the electrode sheet ES on which sampling inspection is performed, data about a part of the electrode sheet ES to be scrapped, data about a scrapped part of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a joint sensor, a datum point sensor, or a vision machine.

The measurement data and the inspection data described above may be time series data. The measurement data and the inspection data may be temporally ordered. Temporal ordering is a main feature of time series data, and is organizing events in an order in which they occur and arrive to be processed. That is, the measurement data and the inspection data may be stored based on points in time when measurement and inspection are performed, and may be related to time. Accordingly, each of measured values of the measurement data may be matched to time, and each of inspection values of the inspection data may be matched to time.

For example, data of measurement amounts (e.g., an amount of loading on the electrode sheet ES or a thickness of the electrode sheet ES) may include a series of measurement amounts (e.g., amounts of loading on the electrode sheet ES or thicknesses of the electrode sheet ES) and time values related to the series of measurement amounts. The measured amounts and the time values may be matched in a one-to-one manner but are not limited thereto. As another example, the defect data may include a value indicating a defect and a time value related to the value indicating the defect. Here, the value indicating the defect should be understood to mean that the value include information about at least one of the presence of defect and the type of defect.

Whether a measured part of the electrode sheet ES is defective or not may be determined by processing the measurement data by a set method. When an amount of the measured coating material on the electrode sheet ES (e.g., an amount of loading on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the amount of loading on the electrode sheet ES or the thickness of the electrode sheet ES) is less than the lower limit or greater than the upper limit.

The sensing part of the measuring device and the sensing part of the inspector may be configured to sense a physical quantity of the electrode sheet ES to generate a measurement signal. For example, the sensing part may include a time delay and integration (TDI) camera, a complementary metal oxide semiconductor (CMOS) image sensor, a time-of-flight (TOF) sensor, etc. The sensing part may include an emitter and a receiver that are configured to perform measurement using non-destructive signals such as ultrasound waves, microwaves, terahertz waves, or infrared rays. The sensing part may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a color sensor, an OCR reader, a visible light and infrared sensor, a camera, etc.

The processors may be configured to collect an inspection signal and a measurement signal sensed by the sensing parts to generate inspection data and measurement data. The processors may be connected to the sensing parts by wire or wirelessly. The processor of the measuring device may be configured to calibrate the measurement data by adding an offset measurement amount to each of the plurality of measured values of the measurement data. Due to the progress of a process and the aging of equipment, the measured values of the measurement data may be different from actual values. The processor may calibrate the measurement data based on the offset measurement amount. The offset measurement amount may be determined based on information about an equipment system obtained by a method such as a sample test.

According to example embodiments, the inspector and the measuring device may be configured to calibrate coordinate data based on positions thereof. More specifically, the inspector and the measuring device may be configured to calibrate the coordinate data based on an offset length to relate coordinates of the coordinate data with measured values of measurement data or inspection values of inspection data. The calibration of the coordinate data by the inspector and the measuring device is similar to calibration performed using the offset lengths OL1, OL2, and OL3.

The processor of the measuring device may be configured to collect evaluation data based on the measurement data. The evaluation data may be collected based on a comparison between measured values of a plurality of sections of the electrode sheet ES and a set range. For example, a measured value (or an average) that is in a first range may be determined as normal, a measured value (or an average) that is in a second range greater than the first range may be determined as excessive, a measured value (or an average) that is in a third range greater than the second range may be determined as very excessive, a measured value (or an average) that is in a fourth range less than the first range may be determined as insufficient, and a measured value (or an average) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The first controller 141 may be in operative communication with the first rotary encoder 121, the second rotary encoder 123, the NG sensor 131, the joint sensor 133, the datum point sensor 135, and additional measuring devices and inspectors through a wired or wireless data network. The data network may be unidirectional or bidirectional. The data network may be implemented by a physical channel, WiFi, public networks and/or specialized networks using Bluetooth or other frequency bands.. The first rotary encoder 121, the second rotary encoder 123, the NG sensor 131, the joint sensor 133, the datum point sensor 135, and the additional measuring devices and inspectors may be configured to collect data from an equipment, a workpiece, an intermediate product, and a product in the rewinding equipment 100 or to generate a signal for collecting data therefrom.

The first controller 141 may be configured to transmit the NG sensing data NSD, the joint sensing data JSD, the scrap data SD, and the datum point sensing data DSD to the second controller 143. The NG sensing data NSD, the joint sensing data JSD, the scrap data SD, and the datum point sensing data DSD may be transmitted to the server 1020 via the second controller 143 and the server 1010. The second controller 143 and the server 1010 may relay communication of data, including the NG sensing data NSD, the joint sensing data JSD, the scrap data SD, and the datum point sensing data DSD, between the server 1020 and the first controller 141. However, the present invention is not limited thereto, and the first controller 141 may directly transmit the NG sensing data NSD, the joint sensing data JSD, the scrap data SD, and the datum point sensing data DSD to the server 1020.

For control of a process, a communication line may be installed between the second controller 143 and the server 1020 to connect the second controller 143 and the server 1020 via the server 1010. Accordingly, data transmission through the second controller 143 may reduce resources required to install the communication line and ensure efficient data processing and management, compared to a case in which the first and second rotary encoders 121 and 123 and the datum point sensor 135 directly transmit the input amount signal UWAS, the exhaustion amount signal WAS, and the measurement signal to the server 1020 and a case in which the first controller 141 directly transmits the measurement data CMD and the evaluation data ED to the server 1020.

The server 1010 may be a communication server. The server 1010 may include a program for communication between the second controller 143 of manufacturing equipment and the server 1020 which is a higher server. The server 1010 may be implemented by hardware as described below. A language and protocol of the server 1020 may be different from a language and protocol of the second controller 143. For example, the language of the server 1020 may be SQL, and the language of the second controller 143 may be a ladder diagram.

The server 1020 may be configured to generate a roll map based on the NG sensing data NSD, the joint sensing data JDS, the scrap data SD, and the datum point DSD. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a manufacturing process.

According to other example embodiments, the server 1020 may be configured to store and process raw measurement data. The server 1020 may manage the quality of processing the electrode sheet ES by continuously monitoring the processing of the electrode sheet ES based on the inspection data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse and store the NG sensing data NSD, the scrap data SD, and the coordinate data for a long time based on a quality assurance period of a product.

According to other example embodiments, in order to create a roll map, the server 1020 may be provided separately from an MES, an SPC, and a data warehouse.

The first controller 141 and the second controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The servers 1010 and 1020 may be implemented by hardware, firmware, software, or a combination thereof. For example, the servers 1010 and 1020 may be computing devices such as a workstation computer, a desktop computer, a laptop computer, and a tablet computer. The servers 1010 and 1020 may include a simple controller, a complex processor such as a microprocessor, a CPU, or a GPU, a processor configured by software, dedicated hardware, or firmware. The servers 1010 and 1020 may be implemented, for example, by a generalpurpose computer or application-specific hardware such as a digital signal process (DSP), a field-programmable gate array (FPGA) or an application specific integrated circuit (ASIC).

The server 1020 may include a physical server or a cloud server. The server 1020 may provide data and an analysis result to an operator through various frameworks. The frameworks may include a protocol that supports data transmission so that the display device 1030 may visualize data through a user interface and provide updated visualization when new data is calculated by the server 1020. The protocol supporting data transmission may include HTML, JavaScript, and/or JSON.

The server 1020 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The server 1020 may transmit a visualization command VC to the display device 1300, and the display device 1300 may visualize a roll map and display the visualized roll map.

The rewinding equipment 100 may implement a plug-in architecture with an API for obtaining data to provide a plug-and-play connection among a measuring device and an inspector. Accordingly, resources in a certain process step and a specific site can be easily transferred to a different process and a different site or new resources can be easily introduced into each process step and each site.

A data network between the components of the secondary battery manufacturing system 10 may include various types of communication channels, including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the secondary battery manufacturing system 10 may further include a manual input system that allows an operator to input manufacturing data. The secondary battery manufacturing system 10 may allow data to be input by an operator with an input tool, and a computer-based input of manufacturing data such as Excel file scraping. The manual input system may be, for example, human-machine interfaces (HMI) of supervisory control and data acquisition (SCADA). Generally, SCADA may include a combination of software and hardware, such as a PLC and remote terminal units (RTUs). HMI is a screen that supports communication between an operator and an SCADA system, and is a key element of the SCADA system. For example, manual input by HMI may include selecting a defective type and reflecting performance at the time of completion.

According to some embodiments, the operations of the first controller 141, the second controller 143, the server 1010, and the server 1020 may be implemented as instructions stored on a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The first controller 141, the second controller 143, the server 1010, and the server 1020 may include firmware, software, routines, and instructions for performing the above-described operations or processes to be described below. For example, the first controller 141, the second controller 143, the server 1010, and the server 1020 may be instantiated in a memory.

The first controller 141 may be implemented by software configured to receive the input amount signal UWAS, the exhaustion amount signal WAS, the NG sensing signal NSS, the joint sensing signal JSS, and the datum point sensing signal DSS, collect coordinate data, the NG sensing data NSD, the joint sensing data JSD, the scrap data SD, and the datum point sensing data DSD, and transmit the NG sensing data NSD, the joint sensing data JSD, and the datum point sensing data DSD.

The second controller 143 may be implemented by software configured to generate a control signal for controlling the unwinder 111, the rewinder 113, the scrap port 117, and the processing apparatus 119 based on a product ID, a product recipe, the defect data DD, and the NG sensing signal NSS, receive the NG sensing data NSD, the joint sensing data JSD, the scrap data SD, and the datum point sensing data DSD, and transmit the NG sensing data NSD, the joint sensing data JSD, the scrap data SD, and the datum point sensing data DSD.

The server 1010 may be implemented by software for relaying the transmission of data and information between the second controller 143 and the server 1020. More specifically, the server 1010 may be implemented by software configured to control the flow of communication between the second controller 143 and the server 1020 and perform error control, synchronization, order control, addressing, multiplexing, routing, format conversion, etc.

The server 1020 may be implemented by, for example, software configured to transmit a product ID and a product recipe to the second controller 143 and generate a roll map based on NG sensing data NSD, the joint sensing data JSD, the scrap data SD, and the datum point sensing data DSD.

However, the above description is provided only for convenience of description, and the first controller 141, the second controller 143, the server 1010, and the server 1020 may also result from computing devices, distributed computing devices, processors, firmware, software, routines, and other devices executing routines, and instructions.

An architecture of the secondary battery manufacturing system 100 configured to generate a roll map may be implemented by adding only the first controller 141 to the second controller 143, the server 1010, and the server 1020, which are essential elements in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, sensing/improvement of problematic processes, and effective introduction of new processes.

### (Second Embodiment)

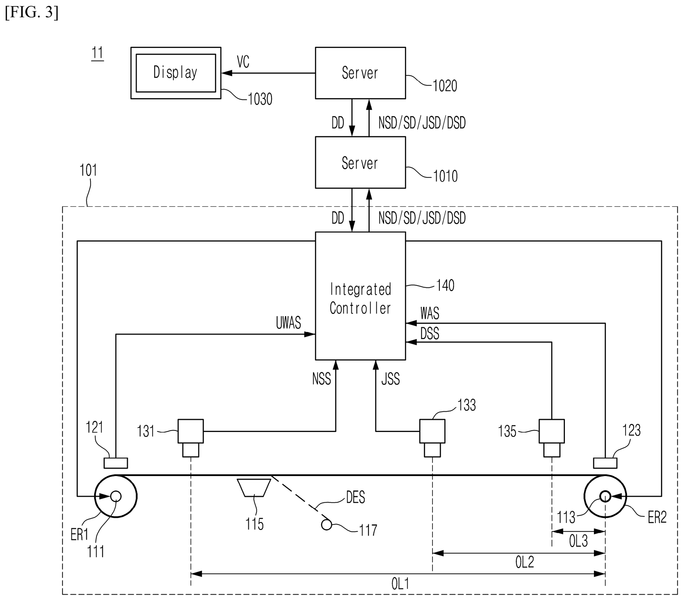

FIG. 3 illustrates a secondary battery manufacturing system 11 according to example embodiments.

Referring to FIG. 3, the secondary battery manufacturing system 11 may include a rewinding equipment 100, a server 1010, a server 1020, and a display device 1030.

The server 1010, the server 1020, and the display device 1030 are substantially the same as those described above with reference to FIG. 2.

The rewinding equipment 101 may include an unwinder 111, a rewinder 113, a splicing table 115, a scrap port 117, a first rotary encoder 121, a second rotary encoder 123, a datum point sensor 135, an integrated controller 140, the server 1010, the server 1020, and the display device 1030.

The unwinder 111, the rewinder 113, the splicing table 115, the scrap port 117, the first rotary encoder 121, the second rotary encoder 123, the datum point sensor 135, the server 1010, the server 1020, and the display device 1030 are substantially the same as those described above with reference to FIG. 1 and thus a redundant description thereof is omitted here.

The integrated controller 140 may be configured to perform the functions of the first controller 141 and the second controller 143 of FIG. 1. Thus, the integrate controller 140 may be implemented by software configured to receive an input amount signal UWAS, an exhaustion amount signal WAS, an NG sensing signal NSS, a joint sensing signal JSS, and a datum point sensing signal DSS, coordinate data, collect NG sensing data NSD, joint sensing data JSD, scrap data SD and datum point sensing data DSD, transmit the NG sensing data NSD, the joint sensing data JSD, the scrap data SD and the datum point sensing data DSD, and generate a control signal for control of the unwinder 111, the rewinder 113, the scrap port 117 and the processing apparatus 119 based on a product ID, a product recipe, defect data DD and an NG sensing signal NSS.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A rewinding equipment comprising:
an unwinder configured to unwind an electrode sheet from a first electrode roll;
a scrap port configured to scrap a defective part of the electrode sheet;
a rewinder configured to wind the electrode sheet into a second electrode roll;
a first rotary encoder configured to sense a length of the electrode sheet unwound by the unwinder to generate an input amount signal;
a second rotary encoder configured to sense a length of the electrode sheet wound by the rewinder to generate an exhaustion amount signal; and
a first controller configured to collect coordinate data indicating a position on the electrode sheet based on the exhaustion amount signal.

2. The rewinding equipment of claim 1, wherein
the first controller is configured to collect scrap data indicating a length of the scrapped part of the electrode sheet based on the input amount signal.

3. The rewinding equipment of claim 1, further comprising
an NG sensor configured to sense an NG mark and an NG tag on the electrode roll to generate an NG sensing signal.

4. The rewinding equipment of claim 3, wherein
the first controller is configured to collect NG sensing data by relating the NG sensing signal with the coordinate data.

5. The rewinding equipment of claim 4, wherein
the first controller is configured to control the unwinder and the rewinder based on the NG sensing data.

6. The rewinding equipment of claim 4, further comprising
a second controller configured to control the unwinder and the rewinder based on the NG sensing data.

7. The rewinding equipment of claim 1, further comprising
a joint sensor configured to sense a joint of the electrode roll to generate a joint sensing signal.

8. The rewinding equipment of claim 7, wherein
the first controller is configured to collect joint sensing data by relating the joint sensing signal with the coordinate data.

9. The rewinding equipment of claim 1, further comprising
a datum point sensor configured to sense a datum point on the electrode roll to generate a datum point sensing signal.

10. The rewinding equipment of claim 9, wherein
the first controller is configured to collect datum point sensing data by relating the datum point sensing signal with the coordinate data.

11. The rewinding equipment of claim 10, wherein
the first controller is configured to transmit the datum point sensing data to a server, and
the server is configured to generate a roll map indicating the electrode sheet based on the datum point sensing data.

12. The rewinding equipment of claim 10, wherein
the first controller is configured to transmit the datum point sensing data to a second controller, and
the second controller is configured to control the unwinder and the rewinder.

13. The rewinding equipment of claim 12, wherein
the second controller is configured to transmit the datum point sensing data to a server, and
the server is configured to generate a roll map indicating the electrode sheet based on the datum point sensing data.

14. A secondary battery manufacturing system comprising:
a roll pressing equipment configured to perform a rolling process; and
a rewinding equipment configured to process a first electrode roll processed by the roll pressing equipment,
wherein the rewinding equipment comprises: an unwinder configured to unwind an electrode sheet from the first electrode roll; a scrap port configured to scrap a defective part of the electrode sheet; a rewinder configured to wind the electrode sheet into a second electrode roll; a first rotary encoder configured to sense a length of the electrode sheet unwound by the unwinder to generate an input amount signal; a second rotary encoder configured to sense a length of the electrode sheet wound by the rewinder to generate an exhaustion amount signal; and a first controller configured to collect coordinate data indicating a position on the electrode sheet based on the exhaustion amount signal.

15. The secondary battery manufacturing system of claim 14, wherein
the first controller is configured to collect scrap data indicating a length of the scrapped part of the electrode sheet based on the input amount signal.

16. The secondary battery manufacturing system of claim 14, further comprising
an NG sensor configured to sense an NG mark and an NG tag on the electrode roll to generate an NG sensing signal.

17. The secondary battery manufacturing system of claim 16, wherein
the first controller is configured to collect NG sensing data by relating the NG sensing signal with the coordinate data.

18. The secondary battery manufacturing system of claim 17, wherein
the first controller is configured to control the unwinder and the rewinder based on the NG sensing data.

19. The secondary battery manufacturing system of claim 17, further comprising
a second controller configured to control the unwinder and the rewinder based on the NG sensing data.
